# EUROPÄISCHE PATENTSCHRIFT

(11) **EP 3 802 244 B1**
(45) Veröffentlichungstag und Bekanntmachung des Hinweises auf die Patenterteilung: **06.04.2022**
(21) Anmeldenummer: 19724123.5
(22) Anmeldetag: 06.05.2019
(51) Int. Cl.: B60T 8/17, B60T 17/22

(54) **STEUEREINRICHTUNG UND VERFAHREN FÜR DIE ANSTEUERUNG EINES AKTUATORS ZUR BETÄTIGUNG VON BREMSMITTELN EINES FAHRZEUGES, INSBESONDERE EINES SCHIENENFAHRZEUGS**
CONTROL UNIT AND METHOD FOR CONTROLLING A BRAKE ACTUATOR OF A VEHICLE, PARTICULARLY OF A RAILWAY VEHICLE
UNITÉ DE CONTRÔLE ET MÉTHODE POUR CONTRÔLER UN ACTIONNEUR DE FREIN D'UN VÉHICULE, NOTAMMENT D'UN VÉHICULE FERROVIAIRE

(30) Priorität: 29.05.2018 DE 102018112846
(43) Veröffentlichungstag der Anmeldung: 14.04.2021
(73) Patentinhaber: KNORR-BREMSE Systeme für Schienenfahrzeuge GmbH, 80809 München (DE)
(72) Erfinder: ETZBACH, Andrea, 80634 München (DE); BOXHAMMER, Markus, 85748 München (DE); HECKMANN, Benjamin, 85586 Poing (DE)
(86) Internationale Anmeldenummer: PCT/EP2019/061494
(87) Internationale Veröffentlichungsnummer: WO 2019/228757

(56) Entgegenhaltungen:
- EP-A1- 2 890 596
- DE-A1-102011 006 002
- DE-A1-102013 201 623
- DE-A1-102015 110 053

## Beschreibung

Die Erfindung betrifft eine Steuereinrichtung für die Ansteuerung mindestens eines Aktuators zur Betätigung von Bremsmitteln eines Fahrzeuges, insbesondere eines Schienenfahrzeuges, bei welcher ausgehend von einem über einen ersten Sensor gemessenen Istwert eines aktuellen Bremsdrucks p_{B} oder einer aktuellen Anpresskraft F_{B} des mindestens einen Aktuators zum Anpressen an die Bremsmittel eine Anpressgrößenregelung nach Maßgabe eines hierfür vorgegebenen Sollwerts eine Stellgröße für den mindestens einen Aktuator bestimmt, und bei welcher aber auch ausgehend von einem über einen zweiten Sensor gemessenen Istwert einer aktuellen Verzögerungskraft F_{V} oder eines aktuellen Verzögerungsmoments M_{V} an den Bremsmitteln eine Bremsmomentenregelung nach Maßgabe eines hierfür vorgegebenen Sollwerts eine Stellgröße für den mindestens einen Aktuator bestimmt. Weiterhin betrifft die Erfindung auch ein Schienenfahrzeug mit mindestens einem Wagen, welches mit einer solchen Steuereinrichtung zur Bremsbetätigung ausgestattet ist sowie auch ein Verfahren zum Betrieb der eine spezielle Regelung umsetzenden Steuereinrichtung, welches auch als ein Computerprogrammprodukt ausgebildet sein kann.

Das vornehmliche Einsatzgebiet der Erfindung erstreckt sich auf den Schienenfahrzeugbau. Hier kommen pneumatische, elektromechanische oder elektromagnetische Aktuatoren zum Einsatz, welche die Bremsmittel des Fahrzeugs, beispielsweise eine Scheibenbremse, betätigen. An die Bremsbetätigung werden hohe Sicherheitsanforderungen gestellt und ein Bremsvorgang ist entsprechend einer definierten Sollwertvorgabe zuverlässig reproduzierbar auszuführen. Um diesen Anforderungen zu genügen, kommen in der Praxis Bremsansteuerungen mit verschiedenen Regelalgorithmen zur Anwendung, vornehmlich eine Bremsmomentenregelung oder aber auch eine Anpressgrößenregelung.

Bei einer Bremsmomentenregelung wird die Wirkung der Bremsung durch einen an den Bremsmitteln, vorzugsweise der Bremsscheibe, angeordneten Bremsmomentensensor oder Bremskraftsensor, dessen Messwert über den wirksamen Radius ebenfalls in einen Bremsmoment umrechenbar ist, ermittelt. Es wird nach dem erzeugten Bremsmoment geregelt.

Bei einer Anpressgrößenregelung wird dagegen die vom Aktuator auf die Bremsmittel ausgeübte Anpresskraft oder - insbesondere im Falle pneumatischer Aktuatoren - der aktuelle Bremsdruck gemessen, nach welchem geregelt wird. Auch hierbei ist der Bremsdruck über die wirksame Fläche in die aktuell wirkende Anpresskraft proportional umrechenbar.

Aus der EP 2 890 596 B1 geht eine gattungsgemäße Steuereinrichtung für die Ansteuerung eines Aktuators hervor, welche hier im Sinne einer dezentralen Steuerungsarchitektur direkt im Bremsaktuator implementiert ist. Eine Sollwertvorgabe erfolgt allerdings von zentraler Stelle her, nämlich über eine wagenweise vorgesehene Bremssteuerung. Die dezentral im Bremsaktuator angeordnete Steuereinrichtung umfasst eine Sollwertregelungseinrichtung, die entsprechend des vorgegebenen Sollwerts einer Verzögerungsgröße F_{V} oder M_{V} einen Stellwert für den Aktuator generiert, welcher diesen Stellwert in eine Anpressgröße umsetzt. Nachfolgende Bremsmittel setzen diesen Istwert der Anpressgröße wiederum zum Abbremsen des Fahrzeugs in eine Verzögerungsgröße um. Im Rahmen der Regelung ist ein erster Sensor vorgesehen, der den Istwert der Anpressgröße ermittelt; ein zweiter Sensor ermittelt den Istwert der Verzögerungsgröße. Die Sollwertregelungseinrichtung ist geeignet ausgebildet, bei vorbestimmten Betriebsbedingungen des Fahrzeugs zur Regelung der Verzögerungsgröße den Stellwert so einzustellen, dass der erfasste Istwert der Verzögerungsgröße dem Sollwert der Verzögerungsgröße entspricht. Außerdem ist die besagte Sollwertregelungseinrichtung auch dafür geeignet ausgebildet, bei weiteren vorbestimmten Betriebsbedingungen des Fahrzeugs - beispielsweise in dessen Stillstand - zur Regelung der Anpressgröße den Stellwert so einzustellen, dass der erfasste Istwert der Anpressgröße einem vorgegebenen Sollwert derselben entspricht. Somit führt die dezentral im Bremsaktuator angeordnete Sollwertregelungseinrichtung - je nach Betriebsbedingungen des Fahrzeugs - sowohl eine Bremsmomentenregelung als auch eine Anpressgrößenregelung durch. Bei diesem Stand der Technik wird somit bremsaktorweise zwischen Anpress- und Verzögerungsgrößenregelung, je nach unterschiedlichen Betriebsbedingungen, aktiv umgeschaltet.

Nachteilhaft hierbei ist, dass die von der besagten Sollwertregulierungseinrichtung verarbeiteten oder berechneten Regelungsgrößen, wie beispielsweise die sensortechnisch ermittelten Istwerte und die im Rahmen der Regelung jeweils berechneten Stellwerte zum Ausgleich der Sollwertabweichung, nicht an zentraler Stelle gebündelt und dort nutzbar gemacht werden können, beispielsweise zwecks Plausibilitätsprüfungen, Wirküberwachungen und dergleichen. Zudem ist die in lokalen Bremsaktuatoren integrierte Rechenkapazität oftmals begrenzt, so dass komplexe Regelungsfunktionen oder die vorstehend erwähnten Zusatzfunktionen dort nicht durchführbar sind. Sollte zudem eine Beschädigung des Bremsaktuators auftreten, so können beide Regelkreise, nämlich die Bremsmomentenregelung und die Anpressgrößenregelung, davon betroffen sein, so dass im Extremfall nur noch auf eine demgegenüber unkomfortable Notbremsfunktion zurückgegriffen werden könnte.

Es ist daher die Aufgabe der vorliegenden Erfindung, eine gattungsgemäße Steuereinrichtung für die Ansteuerung mindestens eines Aktuators zur Betätigung von Bremsmitteln eines Fahrzeuges beziehungsweise ein hiervon durchgeführtes Verfahren zum Betrieb derselben dahingehend weiter zu verbessern, dass ein größerer Funktionsumfang sowie eine höhere Ausfallsicherheit realisierbar ist.

Die Aufgabe wird ausgehend von einer Steuereinrichtung gemäß dem Oberbegriff von Anspruch 1 in Verbindung mit dessen kennzeichnenden Merkmalen gelöst. Hinsichtlich auf ein diese Steuereinrichtung enthaltenes Schienenfahrzeug wird auf die nebengeordneten Ansprüche 4 und 5 verwiesen. Verfahrenstechnisch wird die Aufgabe durch Anspruch 6 gelöst und der Anspruch 10 gibt ein das Verfahren verkörperndes Computerprogrammprodukt an. Die jeweils rückbezogenen abhängigen Ansprüche beinhalten vorteilhafte Weiterbildungen der Erfindung.

Die Erfindung schließt die technische Lehre ein, dass eine spezielle kaskadierende Regelung vorgesehen ist, bei welcher die Anpressgrößenregelung einen inneren Regelkreis bildet, wobei die Bremsmomentenregelung in einer separat und örtlich getrennt hiervon ausgeführten Bremsmomentenregeleinheit angeordnet ist und einen äußeren Regelkreis bildet. Dabei führt der äußere Regelkreis eine vor dem inneren Regelkreis priorisierte Ansteuerung des mindestens einen Aktuators durch, wobei ferner der äußere Regelkreis unter bestimmten Betriebsbedingungen des Fahrzeugs abschaltbar ist, so dass infolgedessen der innere Regelkreis automatisch den mindestens einen Aktuator ansteuert.

Mit anderen Worten wird erfindungsgemäß eine kasdadierte Regelung geschaffen, welche nicht nur einer Priorisierung des äußeren Regelkreises vor dem inneren Regelkreis unterworfen ist, sondern auch eine örtliche Trennung der die beiden Regelkreise umsetzenden Baueinheiten vornimmt. Hierdurch wird gegenüber dem Stand der Technik ein hohes Maß an Ausfallsicherheit erzielt und es wird nicht allein die Rechenkapazität einer einzigen Baueinheit mit der Erfüllung der regelungstechnischen Funktionen belastet, so dass gegebenenfalls auch weitere steuerungstechnische Zusatzfunktionen im Rahmen der erfindungsgegenständlichen Steuerungs- und Regelungsarchitektur durchführbar sind.

Bei der erfindungsgemäßen Lösung ist im Normalbetrieb des Fahrzeugs, der einen normalen Bremsfall beinhaltet, der äußere Regelkreis zur Ansteuerung des mindestens einen Aktuators mit Priorität vor dem inneren Regelkreis vorgesehen. Es erfolgt im Normalbetrieb also bremsmomentengeregelte Bremsung. Unter bestimmten Betriebsbedingungen des Fahrzeugs, welche auch bestimmte Fahrzustände beinhalten, ist das Bremsmoment als Istwert für die Bremsmomentenregelung jedoch nicht messbar, beispielsweise bei Stillstand des Fahrzeuges. Tritt ein solcher Fall auf, so wird der äußere Regelkreis abgeschaltet und infolgedessen übernimmt automatisch der innere Regelkreis die Ansteuerung des Aktuators, welcher eine Anpressgrößenregelung vornimmt, die auf einen gewöhnlich stets verfügbaren Messwert des aktuellen Bremsdrucks oder der aktuell auf die Bremsmittel ausgeübten Anpresskraft basiert. Denn beispielsweise auch im Stillstand des Fahrzeuges sind diese Messwerte ermittelbar.

Gemäß einer die Erfindung verbessernden Maßnahme wird vorgeschlagen, dass vorzugsweise die Bremsmomentenregeleinheit oder die Anpressgrößenregeleinheit zur Nutzung des inneren Bremskreises den für die priorisierte Bremsmomentenregelung vorgesehenen Sollwert in einen für die Anpressgrößenregelung geeigneten Sollwert umrechnet, um die Sollwertvorgabe für den inneren Regelkreis bei abgeschaltetem äußeren Regelkreis in einfacher Weise zu gewährleisten. Eine separate Sollwertvorgabe für den inneren Regelkreis kann somit entfallen.

Zur Verbesserung der Ausfallsicherheit wird vorgeschlagen, dass die Bremsmomentenregeleinheit derart auf einer höheren Steuerungsebene als die Anpressgrößenregeleinheit angeordnet ist, dass diese zur Nutzung in Verbindung mit mehreren Anpressgrößenregeleinheiten einer unteren Steuerungsebene ausgebildet ist. Insoweit ist keine 1:1-Zuordnung einer Bremsmomentenregeleinheit zu einer Anpressgrößenregeleinheit erforderlich, woraus eine Einsparung an den zur Umsetzung der Erfindung erforderlichen gerätetechnischen Aufwand erzielt wird. Die bereits vorstehend erörterten bestimmten Betriebsbedingungen des Fahrzeuges oder Fahrzustände, bei denen die Bremsmomentenregelung zugunsten der Anpressgrößenregelung abgeschaltet wird, ist nicht allein auf den Zustand eines Stillstandes des Fahrzeuges beschränkt. Auch andere zur Durchführung einer Bremsmomentenregelung ungeeignete Bedingungen, wie ein Gleiten des Fahrzeugs oder eine Ausgabe offensichtlich fehlerhafter Regelungsgrößen, wie beispielsweise unplausibler Sensormesswerte oder außerhalb von Erwartungsbereichen liegende Stellgrößen, können zu einer Abschaltung der Bremsmomentenregelung führen, so dass im Rahmen der kaskadierten Regelung automatisch der innere Regelkreis die Ansteuerung des Aktuators per Anpressgrößenregelung übernimmt.

Gemäß einer weiteren die Erfindung verbessernden Maßnahme wird vorgeschlagen, dass insbesondere in der auf der höheren Steuerungsebene angesiedelten Bremsmomentenregeleinheit steuerungstechnische Zusatzfunktionen ausgeführt werden, umfassend eine Plausibilitätsprüfung von Regelungsgrößen, eine Wirküberwachung der Bremsmittelbetätigung, eine Datenübermittlung an mindestens eine andere Funktionseinheit, beispielsweise an eine Bremskraftverteilereinheit, Reibwerteberechnungseinheit oder Protokolliereinheit. So kann eine Plausibilisierung der sensortechnisch ermittelten Bremsmomentenmesswerte durch Vergleich mit den Messwerten mehrerer Anpressgrößenregeleinheiten durchgeführt werden. Eine Wirküberwachung der Bremsmittelbetätigung kann dergestalt durchgeführt werden, dass beispielsweise Erwartungsbereiche eines Bremsweges mit der Realität verglichen werden, was auch für eine Verschleißüberwachung verwertbar ist. Außerdem kann eine Weiterverwendung von Regelungsgrößen durch andere Funktionseinheiten dergestalt stattfinden, dass eine im Rahmen des Bremssystems vorgesehene Bremskraftverteilereinheit Rückinformationen über lokal realisierte Bremskräfte erhält oder eine Reibwertberechnungseinheit ausgehend von den Sensormesswerten den Rad-Schiene-Kontakt entlang des Zuges kalkuliert, so dass auch eine Abschätzung der Wirksamkeit einer Reibwertwiederherstellung vorgenommen werden kann.

Durch die Implementierung solcher steuerungstechnischen Zusatzfunktionen in die höhere Steuerungsebene wird die lokal auf der unteren Steuerungsebene begrenzt vorhandene Rechenkapazität geschont. Sowohl der Algorithmus der Bremsmomentenregelung als auch der Algorithmus der Anpressgrößenregelung und gegebenenfalls vorgesehene steuerungstechnische Zusatzfunktionen lassen sich in Form eines Computerprogrammprodukts mit Programmcodemitteln realisieren, wobei die entsprechende Steuerungssoftware vorzugsweise verteilt ist auf die Anpressgrößenregeleinheit sowie die Bremsmomentenregeleinheit, je nach zugewiesener Funktion.

Die erfindungsgemäße Steuerungseinrichtung kann prinzipiell aktor-, radsatz-, drehgestell- oder wagenweise arbeiten, vorzugsweise ist gemäß einer ersten bevorzugten Ausführungsform allerdings vorgesehen, dass pro Aktuator, pro Radsatz oder pro Drehgestell eine insoweit radnahe Anpressgrößenregeleinheit angeordnet ist, wohingegen mindestens eine Bremsmomentenregeleinheit pro Wagen vorgesehen ist. Alternativ hierzu kann die mindestens eine Bremsmomentenregeleinheit auch noch zentraler, nämlich pro Schienenfahrzeug, vorgesehen werden. In diesem Fall ist die Bremsmomentenregeleinheit vorzugsweise im Leitfahrzeug des Schienenfahrzeuges angeordnet. In jedem Fall findet jedoch die Anpressgrößenregelung des inneren Regelkreises radnah in der zugeordneten Anpressgrößenregeleinheit statt.

Es ist auch denkbar, dass im Rahmen der auf der höheren Steuerungsebene angeordneten zentralen Reglereinheit mehrere Bremsmomentenregler gleichzeitig laufen.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine schematische Darstellung eines aus einem einzigen Wagen bestehenden Schienenfahrzeugs mit hierin angeordneter Steuereinrichtung für die Ansteuerung mehrerer Aktuatoren zur Betätigung von je zugeordneten Bremsmitteln,
- Fig. 2: eine schematische Darstellung eines aus mehreren Wagen bestehenden Schienenfahrzeugs mit hierin angeordneter Steuereinrichtung für die Ansteuerung mehrerer Aktuatoren zur Betätigung von je zugeordneten Bremsmitteln, und
- Fig. 3: eine schematische Blockschaltbilddarstellung einer im Rahmen der Steuereinrichtung zur Anwendung kommenden kaskadierten Regelung für die Bremsmomentenregelung sowie die Anpressgrößenregelung auf verschiedenen Steuerungsebenen.

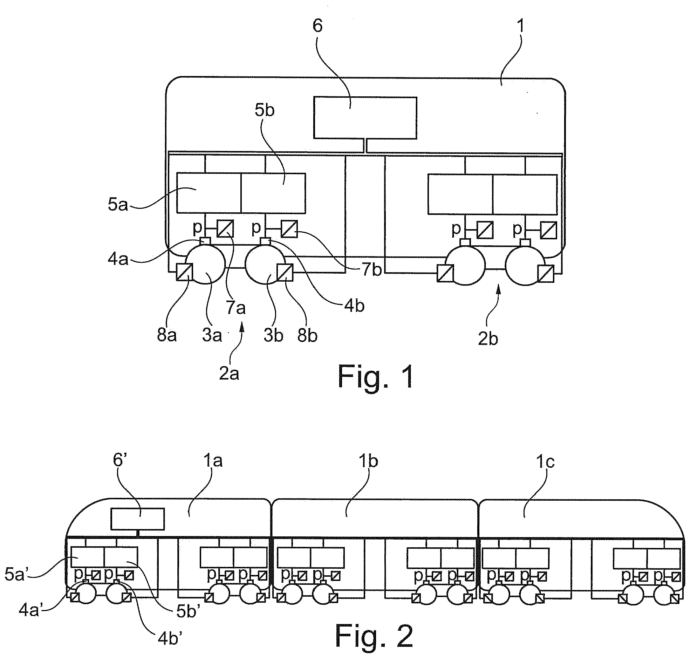

Gemäß **Fig. 1** besteht ein Schienenfahrzeug aus einem einzigen Wagen 1, welcher mit zwei Drehgestellen 2a und 2b ausgestattet ist, die jeweils zwei Radsätze 3a und 3b - hier exemplarisch für das Drehgestell 2a bezeichnet - aufweisen, dessen Rädern je ein Aktuator 4a bzw. 4b zugeordnet ist, welche der Betätigung - hier nicht weiter dargestellter - Bremsmittel dienen. Bei diesem Ausführungsbeispiel sind die exemplarischen Aktuatoren 4a und 4b als pneumatische Bremszylinder ausgebildet. Nachfolgend wird die Steuerungseinrichtung zur Bremsansteuerung für das Drehgestell 2a beschrieben; die Beschreibung gilt jedoch auch analog für das andere Drehgestell 2b.

Jedem Aktuator 4a und 4b ist eine insoweit radnahe Anpressgrößenregeleinheit 5a bzw. 5b zugeordnet. Eine im Rahmen der kaskadierten Regelung zum Einsatz kommende Bremsmomentenregeleinheit 6 ist zentral im Wagen 1 vorgesehen. Dabei können auch mehrere gleichartig ausgestattete Wagen 1 zu einem Zugverband verbunden werden.

Im Übrigen steht jede Anpressgrößenregeleinheit 5a bzw. 5b mit einem ersten Sensor 7a bzw. 7b zur Messung des Istwertes des aktuellen Bremsdrucks p_{B} für einen inneren Regelkreis in Verbindung. Demgegenüber steht die Bremsmomentenregeleinheit 6 mit einem zweiten Sensor 8a bzw. 8b zur Messung des aktuell von den Bremsmitteln an den Rädern ausgeübten Verzögerungsmoments M_{V} zur Realisierung des äußeren Regelkreises in Verbindung.

Nach Fig. 2 ist ein Schienenfahrzeug aus mehreren Wagen 1a bis 1c gebildet, wobei hier je eine radnahe Anpressgrößenregeleinheit 5a', 5b' pro Aktuator 4a', 4b' vorgesehen ist. Diesen ist eine einzige Bremsmomentenregeleinheit 6' pro Schienenfahrzeug zugeordnet, die in einem vorderen als Leitfahrzeug dienenden Wagen 1a angeordnet ist. Im Übrigen gleicht dieses Ausführungsbeispiel dem vorgehend beschriebenen Ausführungsbeispiel in analoger Weise.

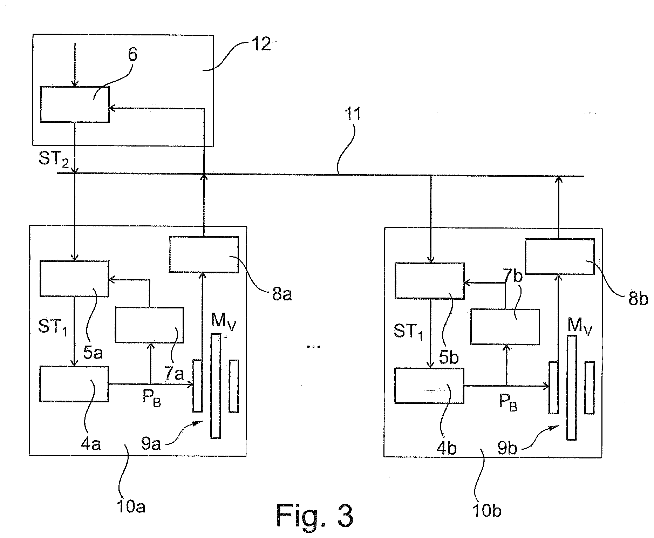

Die Fig. 3 illustriert das Zusammenwirken mehrerer in lokalen Reglereinheiten 10a, 10b angeordneten inneren Regelkreisen einer niedrigen Steuerungsebene mit einem im wesentlichen in einer zentralen Reglereinheit 12 angeordneten äußeren Regelkreis einer höheren Steuerungsebene. Diese kaskadierte Regelung ist auf die beiden zuvor beschriebenen Ausführungsbeispiele von Schienenfahrzeugen applizierbar.

Im Rahmen des ersten inneren Regelkreises ist der Aktuator 4a ein pneumatischer Bremszylinder, dessen Anpresskraft auf Bremsmittel 9a in Form einer an sich bekannten Scheibenbremsanordnung wirkt. Dabei misst ein erster Sensor 7a den Istwert des aktuellen Bremsdrucks p_{B}, den der Aktuator 4a zum Anpressen auf die Bremsmittel 9a ausübt. Der vom ersten Sensor 7a ermittelte Messwert wird einem in einer Anpressgrößenregeleinheit 5a hinterlegten Algorithmus einer Anpressgrößenregelung als Istwert zugeführt, welche nach Maßgabe eines vorgegebenen Sollwerts eine Stellgröße ST₁ für den Aktuator 4a ermittelt, also eine Druckerhöhung oder -verminderung zum Ausgleich der auftretenden Regeldifferenz. Diese Anpressgrößenregelung der Anpressgrößenregeleinheit 5a bildet im Rahmen dieser kaskadierten Regelung den inneren Regelkreis.

Demgegenüber wird der äußere Regelkreis durch eine Bremsmomentenregelung gebildet, welche über einen zweiten Sensor 8a das aktuelle Verzögerungsmoment M_{V} an den Bremsmitteln 9a misst und einer Bremsmomentenregeleinheit 6 zur Verfügung stellt. Die Bremsmomentenregeleinheit 6 ist gegenüber den je radweise zugeordneten inneren Regelkreisen 10a und 10b auf einer höheren Steuerungsebene angeordnet und mit dieser per Datenbusleitung 11 zwecks bidirektionaler Kommunikation verbunden. Die Bremsmomentenregeleinheit 6 ermittelt zum Ausgleich der Regeldifferenz eine Stellgröße ST₂, welche im Normalbetrieb zur Ansteuerung des Aktuators 4a vorgesehen ist, und diesem über die Anpressgrößenregeleinheit 5a weitergeleitet wird.

Gemäß der Funktion der kaskadierten Regelung nimmt der äußere Regelkreis eine vor dem inneren Regelkreis priorisierte Ansteuerung des Aktuators 4a bzw 4b vor, wobei der radfern angeordnete äußere Regelkreis unter bestimmten Betriebsbedingungen des Fahrzeuges abschaltbar ist, so dass infolgedessen automatisch der innere Regelkreis jedes Aktuators 4a, 4b die Ansteuerung übernimmt.

Die zentral positionierte Bremsmomentenregeleinheit 6 der höheren Steuerungsebene ist bei diesem Ausführungsbeispiel mehreren Anpressgrößenregeleinheiten 5a und 5b als gemeinsamer äußerer Regelkreis zugeordnet.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass innerhalb einer Bremsmomentenregeleinheit mehrere Bremsmomentenregelungs-Algorithmen parallel ausgeführt werden und auch mehr als zwei lokale Anpressgrößenregeleinheiten einer zentralen Bremsmomentenregeleinheit zugeordnet sind. Die erfindungsgemäße Lösung erlaubt darüber hinaus auch Architekturen, bei welchen Räder von Fahrzeugen bremsbetätigt werden, die nicht im Rahmen eines Drehgestells angeordnet sind.

### BEZUGSZEICHENLISTE

- 1: Wagen
- 2: Drehgestell
- 3: Radsatz
- 4: Aktuator
- 5: Anpressgrößenregeleinheit
- 6: Bremsmomentenregeleinheit
- 7: erster Sensor
- 8: zweiter Sensor
- 9: Bremsmittel
- 10: lokale Reglereinheit
- 11: Datenbusleitung
- 12: zentrale Reglereinheit

- p_{B}: Istwert des Bremsdrucks
- F_{B}: Istwert der Anpresskraft
- F_{V}: Istwert der Verzögerungskraft
- M_{V}: Istwert des Verzögerungsmoments
- ST₁: Stellgröße der Anpressgrößenregelung
- ST₂: Stellgröße der Bremsmomentenregelung
- S_{V}: Sollwert für die Bremsmomentenregelung
- S_{B}: Sollwert für die Anpressgrößenregelung

## Patentansprüche

1. Steuereinrichtung für die Ansteuerung mindestens eines Aktuators (4a; 4b) zur Betätigung von Bremsmitteln eines Fahrzeuges, insbesondere eines Schienenfahrzeuges,
- bei welcher ausgehend von einem über einen ersten Sensor (7a; 7b) gemessenen Istwert eines aktuellen Bremsdrucks (p_{B}) oder einer aktuellen Anpresskraft (F_{B}) des mindestens einen Aktuators (4a; 4b) zum Anpressen an die Bremsmittel eine Anpressgrößenregelung nach Maßgabe eines hierfür vorgegebenen Sollwerts eine Stellgröße (ST₁) für den mindestens einen Aktuator (4a; 4b) bestimmt, und
- bei welcher ausgehend von einem über einen zweiten Sensor (8a; 8b) gemessenen Istwert einer aktuellen Verzögerungskraft (F_{V}) oder eines aktuellen Verzögerungsmoments (M_{V}) an den Bremsmitteln eine Bremsmomentenregelung nach Maßgabe eines hierfür vorgegebenen Sollwerts eine Stellgröße (ST₂) für den mindestens einen Aktuator (4a; 4b) bestimmt,
**dadurch gekennzeichnet, dass**
für die Anpressgrößenregelung und Bremsmomentenregelung eine kaskadierte Regelung vorgesehen ist, bei welcher
- die Anpressgrößenregelung in einer Anpressgrößenregeleinheit (5a; 5b) angeordnet einen inneren Regelkreis bildet, und dass
- die Bremsmomentenregelung in einer hiervon ausgeführten Bremsmomentenregeleinheit (6) angeordnet ist und einen äußeren Regelkreis bildet, wobei
- der äußere Regelkreis eine vor dem inneren Regelkreis priorisierte Ansteuerung des mindestens einen Aktuators (4a; 4b) durchführt, wobei ferner
- der äußere Regelkreis unter bestimmten Betriebsbedingungen des Fahrzeugs abschaltbar ist, so dass in Folge dessen der innere Regelkreis den mindestens einen Aktuator (4a; 4b) ansteuert.

2. Steuereinrichtung nach Anspruch 1,
**dadurch gekennzeichnet, dass**
die Bremsmomentenregeleinheit (6) oder die Anpressgrößenregeleinheit (5a; 5b) zur Nutzung des inneren Regelkreises den für die Bremsmomentenregelung vorgesehenen Sollwert in einen Sollwert für die Anpressgrößenregelung umrechnet, um die Sollwertvorgabe für den inneren Regelkreis bei abgeschalteten äußeren Regelkreis zu gewährleisten.

3. Steuereinrichtung nach Anspruch 1 oder 2,
**dadurch gekennzeichnet, dass**
die Bremsmomentenregelung in einer separat und örtlich getrennt von der Anpressgrößenregeleinheit (5a; 5b) ausgeführten Bremsmomentenregeleinheit (6) angeordnet ist.

4. Steuereinrichtung nach Anspruch 3,
**dadurch gekennzeichnet, dass**
die Bremsmomentenregeleinheit (6) innerhalb einer zentralen Reglereinheit (12) auf einer höheren Steuerungsebene als die demgegenüber in einer lokalen Reglereinheit (10) untergebrachte Anpressgrößenregeleinheit (5a; 5b) angeordnet ist, wobei die Bremsmomentenregeleinheit (6) zur Nutzung in Verbindung mit mehreren Anpressgrößenregeleinheiten (5a, 5b) ausgebildet ist.

5. Schienenfahrzeug mit mindestens einem Wagen (1) an dem mindestens zwei Drehgestelle (2a, 2b) mit je zugeordneten Rädsätzen (3a, 3b) angeordnet sind, dessen Rädern mindestens ein Aktuator (4a, 4b) zur Betätigung von Bremsmitteln über eine Steuereinrichtung nach einem der vorstehenden Ansprüche 1 bis 4 zugeordnet ist,
**dadurch gekennzeichnet, dass**
eine radnahe Anpressgrößenregeleinheit (5a, 5b) pro Aktuator (4a, 4b), pro Radsatz (3a, 3b) oder pro Drehgestell (2a, 2b) vorgesehen ist, wohingegen mindestens eine Bremsmomentenregeleinheit (6) pro Wagen (1) vorgesehen ist.

6. Schienenfahrzeug mit mindestens einem Wagen (1a-1c) an dem mindestens zwei Drehgestelle (2a', 2b') mit je zugeordneten Rädsätzen (3a', 3b') angeordnet sind, dessen Rädern mindestens ein Aktuator (4a', 4b') zur Betätigung von Bremsmitteln über eine Steuereinrichtung nach einem der vorstehenden Ansprüche 1 bis 4 zugeordnet ist,
**dadurch gekennzeichnet, dass**
eine radnahe Anpressgrößenregeleinheit (5a', 5b') pro Aktuator (4a', 4b'), pro Radsatz (3a', 3b') oder pro Drehgestell (2a', 2b') vorgesehen ist, wohingegen mindestens eine Bremsmomentenregeleinheit (6') pro Schienenfahrzeug vorgesehen ist, die vorzugsweise in dessen Leitfahrzeug (1a) angeordnet ist.

7. Verfahren zum Betrieb einer eine kaskadierte Regelung aufweisenden Steuereinrichtung nach einem der vorstehenden Ansprüche 1 bis 4, umfassend die folgenden Steuerlogik:
- Im Normalbetrieb des Fahrzeugs wird der äußere Regelkreis zur Ansteuerung des mindestens einen Aktuators (4a, 4b) mit Priorität vor dem inneren Regelkreis angewendet;
- Unter bestimmten Betriebsbedingungen des Fahrzeugs wird der äußere Regelkreis abgeschaltet; und
- Bei abgeschaltetem äußeren Regelkreis wird automatisch der innere Regelkreis zur Ansteuerung des Aktuators (4a, 4b) angewendet.

8. Verfahren nach Anspruch 7,
**dadurch gekennzeichnet, dass**
zur Nutzung des inneren Regelkreises der für die Bremsmomentenregelung vorgesehene Sollwert (S_{V}) in einen Sollwert (S_{B}) für die Anpressgrößenregelung umgerechnet wird, um die Sollwertvorgabe für den inneren Regelkreis bei abgeschaltetem äußeren Regelkreis zu gewährleisten.

9. Verfahren nach Anspruch 7,
**dadurch gekennzeichnet, dass**
die bestimmten Betriebsbedingungen des Fahrzeugs ausgewählt sind aus einer Gruppe von zur Durchführung einer Bremsmomentenregelung ungeeigneten Bedingungen, umfassend :
- Stillstand des Fahrzeuges,
- Gleiten des Fahrzeugs,
- Ausgabe fehlerhafter Regelungsgrößen.

10. Verfahren nach Anspruch 7,
**dadurch gekennzeichnet, dass**
durch die auf der höheren Steuerungsebene angesiedelte und die Bremsmomentenregeleinheit (6) beinhaltende zentrale Reglereinheit (12) steuerungstechnische Zusatzfunktionen ausgeführt werden, umfassend :
- Plausibilitätsprüfung von Regelungsgrößen,
- Wirküberwachung der Bremsmittelbetätigung,
- Datenübermittlung von Regelungsgrößen an mindestens eine andere Funktionseinheit, umfassend Bremskraftverteilereinheit, Reibwertberechnungseinheit, Protokolliereinheit.

11. Computerprogrammprodukt mit Programmcodemitteln zur Durchführung des Verfahrens nach einem der Ansprüche 7 bis 10, wenn das Computerprogrammprodukt auf einer Anpressgrößenregeleinheit (5a ; 5b) sowie einer Bremsmomentenregeleinheit (6) einer Steuereinrichtung nach einem der Ansprüche 1 bis 4 abläuft.

## Claims

1. A control device for controlling at least one actuator (4a; 4b) for actuating braking means of a vehicle, more particularly of a rail vehicle,
- in which, proceeding from an actual value of a current brake pressure (p_{B}) or a current contact force (F_{B}), measured by means of a first sensor (7a; 7b), of the at least one actuator (4a; 4b) for pressing against the braking means, a contact variable control system determines a manipulated variable (ST₁) for the at least one actuator (4a; 4b) in accordance with a setpoint value stipulated for this purpose, and
- in which, proceeding from an actual value of a current deceleration force (Fv) or a current deceleration torque (Mv) at the braking means, which is measured by means of a second sensor (8a; 8b), a braking torque control system determines a manipulated variable (ST₂) for the at least one actuator (4a; 4b) in accordance with a setpoint value stipulated for this purpose,
**characterized in that**
a cascaded control system is provided for contact variable control and braking torque control, in which system
- the contact variable control system is arranged in a contact variable control unit (5a; 5b) and forms an inner control circuit, and **in that**
- the braking torque control system is arranged in a braking torque control unit (6) embodied thereby and forms an outer control circuit, wherein
- the outer control circuit carries out control of the at least one actuator (4a; 4b) in a manner which is prioritized over the inner control circuit, wherein furthermore
- the outer control circuit can be switched off under particular operating conditions of the vehicle, with the result that the inner control circuit controls the at least one actuator (4a; 4b).

2. The control device as claimed in claim 1,
**characterized in that,**
to use the inner control circuit, the braking torque control unit (6) or the contact variable control unit (5a; 5b) converts the setpoint value provided for braking torque control into a setpoint value for contact variable control in order to ensure setpoint value stipulation for the inner control circuit when the outer control circuit is switched off.

3. The control device as claimed in claim 1 or 2,
**characterized in that**
the braking torque control system is arranged in a braking torque control unit (6) embodied separately or in a separate location from the contact variable control unit (5a; 5b).

4. The control device as claimed in claim 3,
**characterized in that**
the braking torque control unit (6) is arranged within a central controller unit (12), on a higher control level than the contact variable control unit (5a; 5b), which is, in contrast, accommodated in a local controller unit (10), wherein the braking torque control unit (6) is designed for use in conjunction with a plurality of contact variable control units (5a; 5b).

5. A rail vehicle having at least one car (1), in which at least two trucks (2a, 2b), each having associated wheelsets (3a, 3b), are arranged, the wheels of which are assigned at least one actuator (4a, 4b) for the actuation of braking means by way of a control device as claimed in any of preceding claims 1 to 4,
**characterized in that**
a contact variable control unit (5a, 5b) close to the wheels is provided for each actuator (4a, 4b), each wheelset (3a, 3b) or each truck (2a, 2b), whereas at least one braking torque control unit (6) is provided for each car (1).

6. A rail vehicle having at least one car (1a-1c), in which at least two trucks (2a', 2b'), each having assigned wheelsets (3a', 3b') are arranged, the wheels of which are assigned at least one actuator (4a', 4b') for the actuation of braking means by way of a control device as claimed in any of preceding claims 1 to 4,
**characterized in that**
a contact variable control unit (5a', 5b') close to the wheels is provided for each actuator (4a', 4b'), each wheelset (3a', 3b') or each truck (2a', 2b'), whereas at least one braking torque control unit (6') is provided for each rail vehicle, which control unit is preferably arranged in the leading unit (1a) of said rail vehicle.

7. A method for operating a control device, having a cascaded control system, as claimed in any of preceding claims 1 to 4, comprising the following control logic:
- in normal operation of the vehicle, the outer control circuit is used to control the at least one actuator (4a, 4b) with priority over the inner control circuit;
- under particular operating conditions of the vehicle, the outer control circuit is switched off; and,
- with the outer control circuit switched off, the inner control circuit is used automatically to control the actuator (4a, 4b).

8. The method as claimed in claim 7,
**characterized in that,**
for use of the inner control circuit, the setpoint value (Sv) provided for braking torque control is converted into a setpoint value (S_{B}) for contact variable control in order to ensure setpoint value stipulation for the inner control circuit when the outer control circuit is switched off.

9. The method as claimed in claim 7,
**characterized in that**
the particular operating conditions of the vehicle are selected from a group of conditions unsuitable for carrying out braking torque control, comprising:
- standstill of the vehicle,
- sliding of the vehicle,
- output of incorrect control variables.

10. The method as claimed in claim 7,
**characterized in that**
additional control functions are performed by the central controller unit (12) situated on the higher control level and containing the braking torque control unit (6), comprising:
- checking the plausibility of control variables,
- monitoring the effect of braking means actuation,
- data transfer of control variables to at least one other functional unit comprising a braking force distributor unit, friction coefficient calculation unit, logging unit.

11. A computer program product with program code modules for carrying out the method as claimed in any of claims 7 to 10 when the computer program product runs on a contact variable control unit (5a; 5b) and a braking torque control unit (6) of a control device as claimed in any of claims 1 to 4.

## Revendications

1. Dispositif de commande d'au moins un actionneur (4a; 4b) d'actionnement de moyens de freinage d'un véhicule, notamment d'un véhicule ferroviaire,
- dans lequel, à partir d'une valeur réelle, mesurée par un premier capteur (7a ; 7b), d'une pression (p_{B}) de frein instantanée ou d'une force (F_{B}) de pression instantanée du au moins un actionneur (4a ; 4b) d'application d'une pression aux moyens de freinage, on détermine pour l'application aux moyens de freinage d'une régulation de la grandeur d'application d'une pression en proportion d'une valeur de consigne donnée à l'avance à cet effet, une grandeur (ST₁) de réglage du au moins un actionneur (4a ; 4b), et
- dans lequel, à partir d'une valeur réelle, mesurée par un deuxième capteur (8a ; 8b), d'une force (Fᵥ) instantanée de décélération ou d'un couple (Mᵥ) instantané de décélération pour l'application aux moyens de freinage d'une régulation de couple de freinage en proportion d'une valeur de consigne donnée à l'avance à cet effet, une grandeur (ST₂) de réglage du au moins un actionneur (4a ; 4b),
**caractérisé en ce que**
il est prévu, pour la régulation de la grandeur d'application d'une pression et pour la régulation du couple de freinage, une régulation en cascade, dans laquelle
- la régulation de la grandeur d'application d'une pression, disposée dans une unité (5a ; 5b) de régulation de la grandeur d'application d'une pression, forme un circuit de régulation intérieur, et **en ce que**
- la régulation du couple de freinage est disposée dans une unité (6) de régulation de couple de freinage, qui en est réalisée, et forme un circuit de régulation extérieur, dans lequel
- le circuit de régulation extérieur effectue une commande en priorité, avant le circuit de régulation intérieur, du au moins un actionneur (4a ; 4b), dans lequel en outre
- le circuit de régulation extérieur peut être mis hors circuit dans certaines conditions de fonctionnement du véhicule, en suite de quoi le circuit de régulation intérieur commande le au moins un actionneur (4a ; 4b).

2. Dispositif de commande suivant la revendication 1,
**caractérisé en ce que**
l'unité (6) de régulation du couple de freinage ou l'unité (5a ; 5b) de régulation de la grandeur d'application d'une pression transforme par le calcul, pour l'utilisation du circuit de régulation intérieur, la valeur de consigne prévue pour la régulation du couple de freinage en une valeur de consigne pour la régulation de la grandeur d'application d'une pression, afin de garantir la prescription de valeur consigne pour le circuit de régulation intérieur, lorsque le circuit de régulation extérieur est mis hors circuit.

3. Dispositif de commande suivant la revendication 1 ou 2,
**caractérisé en ce que**
la régulation du couple de freinage est disposée dans une unité (6) de régulation du couple de freinage réalisée de manière distincte et en étant séparée dans l'espace de l'unité (5a ; 5b) de régulation de la grandeur d'application d'une pression.

4. Dispositif de commande suivant la revendication 3,
**caractérisé en ce que**
l'unité (6) de régulation du couple de freinage est disposée au sein d'une unité (12) centrale de régulation à un niveau de commande plus haut que l'unité (5a ; 5b) de régulation de la grandeur d'application d'une pression logée en revanche dans une unité (10) locale de régulation, l'unité (6) de régulation du couple de freinage étant constituée pour être utilisée en liaison avec plusieurs unités (5a, 5b) de régulation de la grandeur d'application d'une pression.

5. Véhicule ferroviaire comprenant au moins une voiture (1), sur laquelle sont montés au moins deux bogies (2a, 2b) ayant respectivement des essieux (3a, 3b) associés aux roues desquels est associé au moins un actionneur (4a, 4b) d'actionnement de moyens de freinage par un dispositif de commande suivant l'une des revendications 1 à 4 précédentes,
**caractérisé en ce que**
il est prévu une unité (5a, 5b) de régulation de la grandeur d'application d'une pression proche de la roue par actionneur (4a, 4b), par essieu (3a, 3b) ou par bogie (2a, 2b), tandis qu'il est prévu au moins une unité (6) de régulation du couple de freinage par voiture (1).

6. Véhicule ferroviaire comprenant au moins une voiture (1a-1c), sur laquelle sont montés au moins deux bogies (2a', 2b') ayant respectivement des essieux (3a', 3b') associés, aux roues desquels est associé au moins un actionneur (4a', 4b') d'actionnement de moyens de freinage par un dispositif de commande suivant l'une des revendications 1 à 4 précédentes,
**caractérisé en ce que**
il est prévu une unité (5a', 5b') de régulation de la grandeur d'application d'une pression proche de la roue par actionneur (4a', 4b'), par essieu (3a', 3b') ou par bogie (2a', 2b'), tandis qu'il est prévu au moins une unité (6') de régulation du couple de freinage par véhicule ferroviaire, qui est disposée de préférence dans son véhicule (1a) conducteur.

7. Procédé pour faire fonctionner un dispositif de commande comportant une régulation en cascade suivant l'une des revendications 1 à 4, comprenant la logique de commande suivante :
- en fonctionnement normal du véhicule, on applique le circuit de régulation extérieur pour la commande du au moins un actionneur (4a, 4b) en priorité sur le circuit de régulation intérieur ;
- dans certaines conditions de fonctionnement du véhicule, on met hors circuit le circuit de régulation extérieur ; et
- lorsque le circuit de régulation extérieur est mis hors circuit, on applique automatiquement le circuit de régulation intérieur pour commander l'actionneur (4a, 4b).

8. Procédé suivant la revendication 7,
**caractérisé en ce que**
pour utiliser le circuit de régulation intérieur, on transforme par le calcul la valeur (Sv) de consigne prévue pour la régulation du couple de freinage en une valeur (S_{B}) de consigne pour la régulation de la grandeur d'application d'une pression, afin de garantir la prescription de valeur de consigne pour le circuit de régulation intérieur, alors que le circuit de régulation extérieur est mis hors circuit.

9. Procédé suivant la revendication 7,
**caractérisé en ce que**
les conditions de fonctionnement déterminées du véhicule sont sélectionnées dans un groupe de conditions, qui ne conviennent pas pour effectuer une régulation du couple de freinage, comprenant :
- arrêt du véhicule,
- glissement du véhicule,
- émission de grandeurs de régulation défectueuses.

10. Procédé suivant la revendication 7,
**caractérisé en ce que**
par l'unité (12) centrale de régulation établie au niveau de commande le plus haut et contenant l'unité (6) de régulation du couple de freinage, on effectue des fonctions supplémentaires en technique de commande comprenant :
- contrôle de la vraisemblance de grandeurs de régulation,
- surveillance de l'effet de l'actionnement des moyens de freinage,
- transmission de données de grandeurs de régulation à au moins une autre unité fonctionnelle, comprenant une unité de répartition de la force de freinage, une unité de calcul du coefficient de frottement, une unité de consignation.

11. Produit de programme d'ordinateur ayant des moyens de code de programme pour effectuer le procédé suivant l'une des revendications 7 à 10, lorsque le produit de programme d'ordinateur se déroule sur une unité (5a; 5b) de régulation de la grandeur d'application, ainsi que sur une unité (6) de régulation du couple de freinage d'un dispositif de commande suivant l'une des revendications 1 à 4.
